# FASCICULE DE BREVET EUROPEEN

(11) **EP 1 722 205 B1**
(45) Date de publication et mention de la délivrance du brevet: **08.08.2007**
(21) Numéro de dépôt: 06356041.1
(22) Date de dépôt: 10.04.2006
(51) Int. Cl.: G01G 19/02

(54) **Pont-bascule destiné en particulier à la pesée de véhicules automobiles ou de wagons**
Brückenwaage, insbesondere für das Abwiegen von Kraftfahrzeugen oder Wagenladungen
Weighbridge intended in particular to weigh road vehicles or railway wagons

(30) Priorité: 10.05.2005 FR 0504686
(43) Date de publication de la demande: 15.11.2006
(73) Titulaire: Arpege Master K, 69680 Chassieu (FR)
(72) Inventeur: Evesque, Georges, 69330 Meyzieu (FR)
(74) Mandataire: Maureau, Philippe

(56) Documents cités:
- EP-A- 0 851 218
- EP-A- 1 063 499
- DE-U1-9202004 017 23
- FR-A- 2 792 407
- NL-C- 1 014 744

## Description

La présente invention concerne un pont bascule, destiné en particulier à la pesée de véhicules automobiles ou de wagons.

Les ponts bascule de type connu comportent en général une charpente constituée d'éléments métalliques de type longerons et traverses, cette charpente étant habillée par des plaques métalliques et/ou des plaques de béton.

La charpente est reliée à des éléments de fixation d'un ou plusieurs capteurs de pesée, une première partie de chaque capteur étant destinée à être fixée à l'élément de fixation de la charpente, et la seconde partie étant destinée à être en appui sur le support du pont.

Le support du pont peut être constitué par exemple par un ouvrage de béton coulé au niveau du sol, ou dans une fosse creusée dans le sol.

Il existe également des ponts bascules transportables, qui ne sont pas installés sur un ouvrage dédié à cette utilisation mais simplement posés sur le sol.

La présente invention concerne plus particulièrement un pont bascule destiné à être posé sur un ouvrage dédié au niveau du sol ou au fond d'une fosse.

Le document FR 2 792 407 décrit des dispositifs d'appui ou chevêtres destiné à scellés dans l'ouvrage, lors de la réalisation de celui-ci sur le site d'installation, constituant des moyens d'appui de caractéristiques connues sur lesquels peuvent venir s'appuyer les platines d'appui d'un capteur.

Il est ainsi possible d'étalonner et d'effectuer la vérification primitive d'un pont isostatique en usine, puis de transporter le pont sur le site de l'installation, en immobilisant les deux parties du capteur par rapport à la structure du pont, lors du transport de celui-ci.

La vérification primitive est une obligation réglementaire.

Cette solution permet de rendre inutile le démontage et remontage des capteurs, et permet de simplifier significativement l'installation, car les contrôles du pont sur le site de l'installation ne doivent plus être effectués.

En particulier, il n'est plus nécessaire de transporter des masses étalon sur le site de l'installation pour contrôler le pont.

Il apparaît toutefois que le pont de ce type doit être transporté en une seule unité entre l'usine et le lieu d'installation du pont, pour assurer que les contrôles effectués sur le pont en usine seront valables sur le site de l'installation. Pour un pont de taille importante, cette opération est complexe et exige la mise en place de moyens de transport spécifiques.

La présente invention a pour but de résoudre ces inconvénients, en fournissant une structure dont le transport est simplifié tout en conservant la possibilité d'étalonner et d'effectuer la vérification primitive du pont en usine, avant son transport sur le site d'installation.

A cet effet, l'invention a pour objet un pont-bascule destiné en particulier à la pesée de véhicules automobiles ou de wagons, caractérisé en ce qu'il comporte au moins deux modules de pesée autonomes et au moins un module de liaison,
chaque module de pesée comprenant une portion de support présentant une surface supérieure sensiblement plane destinée à être positionnée de façon isostatique sur un ensemble d'au moins quatre capteurs de pesée, et comportant sur au moins un de ses bords des moyens d'accrochage,
l'au moins un module de liaison comportant une portion de support, présentant une surface supérieure sensiblement plane et comportant, sur au moins deux bords opposés, des moyens d'accrochage complémentaires des moyens d'accrochage des bords du module de pesée, et
l'au moins un module de liaison étant destiné à être accroché par les moyens d'accrochage entre deux modules de pesée, sans liaison directe avec le support du pont-bascule.

Ces dispositions permettent d'étalonner et d'effectuer la vérification primitive les modules de pesée sur le site de fabrication, étant donné que ces modules de pesée sont isostatiques, avant la livraison sur le site d'installation, de disposer ces modules sur le site d'installation, puis de disposer entre ces modules de pesée des modules de liaison sans capteurs de pesée ne possédant aucune liaison directe avec le support du pont, sans avoir à contrôler la structure finale.

Cette structure modulaire est basée sur des éléments de taille et de masse restreinte dont le transport est facilité, par rapport notamment à un pont bascule dit monobloc.

Avantageusement, au moins un module de pesée comporte sur aux moins deux bords opposés des moyens d'accrochage.

Selon un mode de réalisation, le pont-bascule comporte un ensemble de modules de pesée et de modules de liaison disposés en alternance, et présentant deux modules de pesée aux deux extrémités.

Avantageusement, au moins un module de pesée comporte des moyens de limitation des mouvements du pont-bascule dans son propre plan.

Selon un mode de réalisation, au moins un module de pesée comporte des moyens permettant de maintenir en position les platines d'appui des capteurs de pesée lors du transport des modules.

Avantageusement, les capteurs de pesée comportent des moyens de génération de signaux numériques.

Selon un mode de réalisation, les moyens d'accrochages complémentaires des modules de pesée et des module de liaison éléments actifs et sont de type tenons et mortaises.

Avantageusement, les modules sont entièrement assemblés en usine.

L'invention porte également sur une installation de pesée comprenant un pont-bascule tel que décrit ci-dessus, l'installation comportant un ouvrage dans lequel sont scellé des dispositifs d'appui comportant des surfaces d'appui pour des platines d'appui des capteurs de pesée des modules de pesée.

Avantageusement, les dispositifs d'appui comportent des éléments destinés à coopérer avec les moyens de limitations du mouvement du pont par rapport à son propre plan des modules de pesée.

De toute façon, l'invention sera bien comprise à l'aide de la description qui suit, en référence au dessin schématique annexé, représentant à titre d'exemple non limitatif, d'un mode de réalisation d'un pont-bascule selon l'invention.

La figure 1 est une vue de dessus, d'un pont-bascule selon l'invention.

La figure 2 est une vue en éclatée, de côté, en coupe du pont-bascule de figure 1.

La figure 3 est une vue en éclaté de dessus de modules du pont bascule de figure 1.

La figure 4 est une vue de détail, de dessus, d'une extrémité d'un module de pesée.

La figure 5 est une vue de détail, de dessus, d'un module de liaison.

La figure 6 est une vue de détail, en coupe transversale de la zone d'accrochage entre un module de pesée et un module de liaison.

La figure 7 est une vue de détail, en coupe transversale de la zone de logement d'un capteur de pesée.

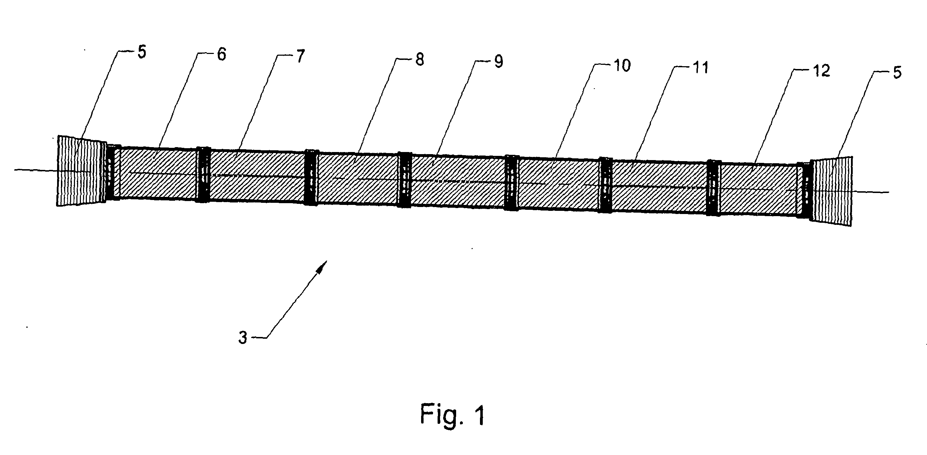

La figure 1 représente une installation pour un pont-bascule 3 comportant un ouvrage 2 dédié disposé au niveau du sol 4. Le pont-bascule 3 est donc, dans le mode de réalisation représenté, dans une configuration dite hors sol, c'est-à-dire au dessus du niveau du sol4. En conséquence, des rampes d'accès 5 sont disposées de part et d'autre du pont-bascule 3 permettant à des véhicules de monter sur celui-ci.

Le pont-bascule 3 présente une structure modulaire constituée d'une succession de modules de pesage 6, 8, 10, 12 et de modules de liaison 7, 9 et 11.

Chaque module de pesage 6, 8, 10, 12 comprend une portion de support 13, présentant une surface supérieure sensiblement plane, destinée à être positionnée de façon isostatique sur un ensemble d'au moins quatre capteurs de pesée 14, et comportant sur au moins un de ses bords des moyens d'accrochage 15.

La portion de support 13 est réalisée, par exemple comme une charpente comportant deux longerons latéraux 16 et des traverses 17, une ou plusieurs dalles de bétons 18 étant coulées ou posées dans cette charpente.

Etant donné l'aspect modulaire du pont, il est possible de réaliser des modules de taille restreinte pour lesquels seules deux longerons et deux traverses d'extrémité sont présentes, et une seule dalle de béton.

Cette disposition simplifie grandement la réalisation des modules.

Au niveau de chaque traverse d'extrémité 17 est prévu un logement 19 ou caisson traversé par deux supports de fixation 20 d'une première partie 22 d'un capteur de pesée 23.

Le capteur en lui-même, et la platine d'appui 24 correspondantes sont connus de l'homme du métier et ne seront décrits ici plus en détail.

De préférence, les capteurs 23 comportent des moyens de génération de signaux numériques. Cette disposition permet d'éviter le scellement des boîtiers de liaison associés aux capteur et une étape d'appariement des capteurs.

En effet, le scellement est obligatoire, selon la réglementation de la métrologie légale pour des capteurs analogiques.

Les modules de pesée 13 comportent des moyens permettant de maintenir en position la platine de chaque capteur lors du transport des éléments.

En effet, les platines d'appui peuvent être bridées sur les parois du logement 19, par des trous 25 prévus en regard sur les parois du logement et sur la platine, dans lesquels des vis ou autres moyens de fixation peuvent être introduits pour assurer le maintien en position de la platine d'appui 24 par rapport à la portion de support 13.

Il est à noter que le logement 19 est ouvert vers le bas pour permettre le passage du capteur 23, et fermé vers haut par une trappe amovible 26 débouchant sur la surface supérieure de la portion de support, permettant d'atteindre le logement 19.

Les modules de pesée 6, 8, 10, 12 comportent également des moyens de limitation des mouvements du pont-bascule 3 dans son propre plan.

En particulier, des butées 27, 28, 29, 30, formant des surfaces de butée dans deux directions perpendiculaires, sont ménagées sur des parois des deux logements 19. Ces butées sont destinées à coopérer avec des éléments fixes décrits plus loin.

Chaque module de pesée 6, 8, 10, 12 peut ainsi être posé sur un support par l'intermédiaire d'un ensemble de quatre capteurs 23, deux capteurs étant logés dans chaque comportiment 19. Cette disposition assure un équilibre isostatique.

Grâce à ces dispositions, chaque module de pesée 6,8, 10, 12 peut être réglé et contrôlé isolément en usine, car son équilibre est autonome.

Chaque module de pesée comprend de plus ses moyens propres de limitation des mouvements du pont-bascule 3 dans son propre plan.

Les modules de pesée 6, 8, 10, 12 comportent en outre, sur au moins un de leur bord, des moyens d'accrochages.

En particulier, les modules de pesée 6 et 12 destinés à être positionnés à une extrémité de la succession de modules comportent des moyens d'accrochage 15 sur un seul de leur bords, et les modules de pesée 8 et 12 destinés à être adjacents à deux modules de liaison comportent des moyens d'accrochage 15 sur deux bords opposés.

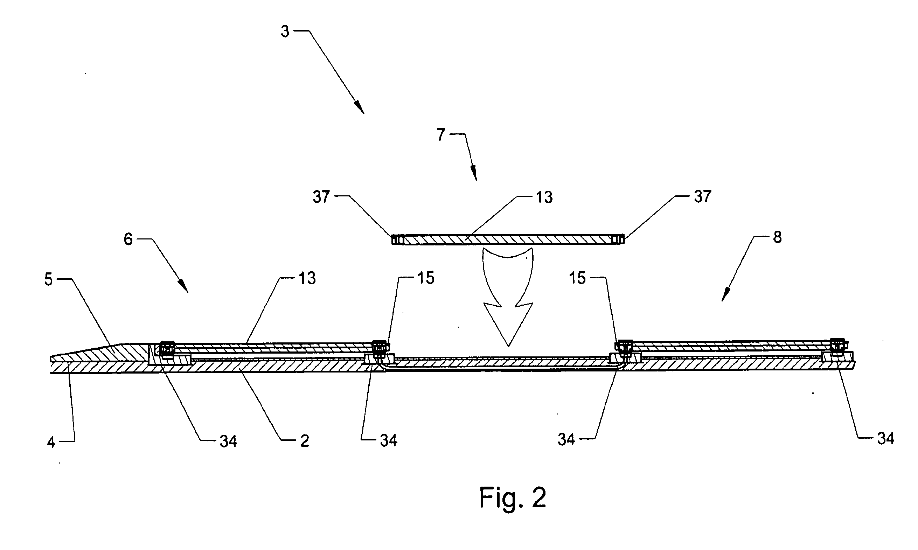

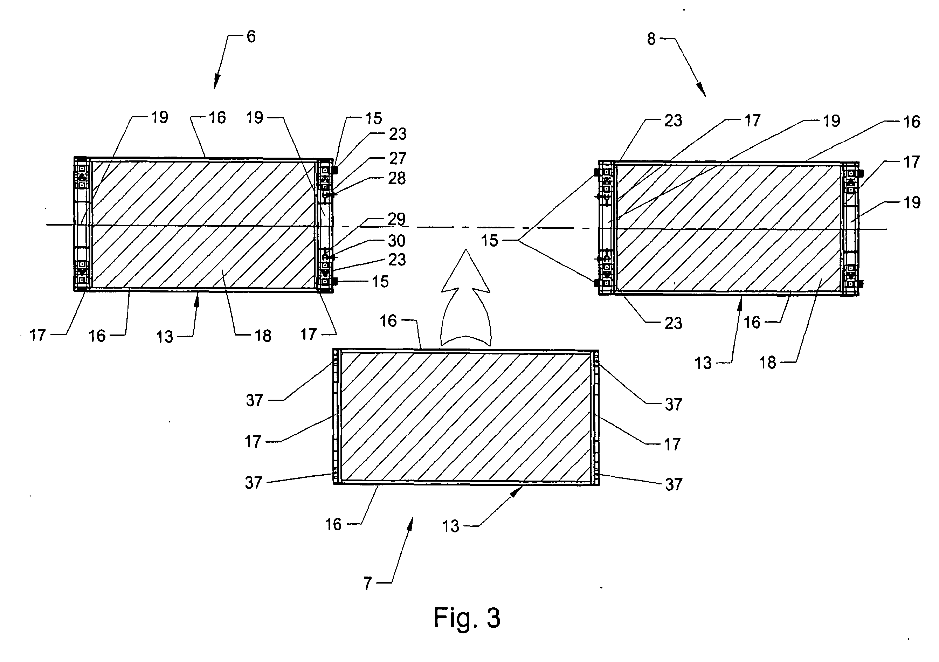

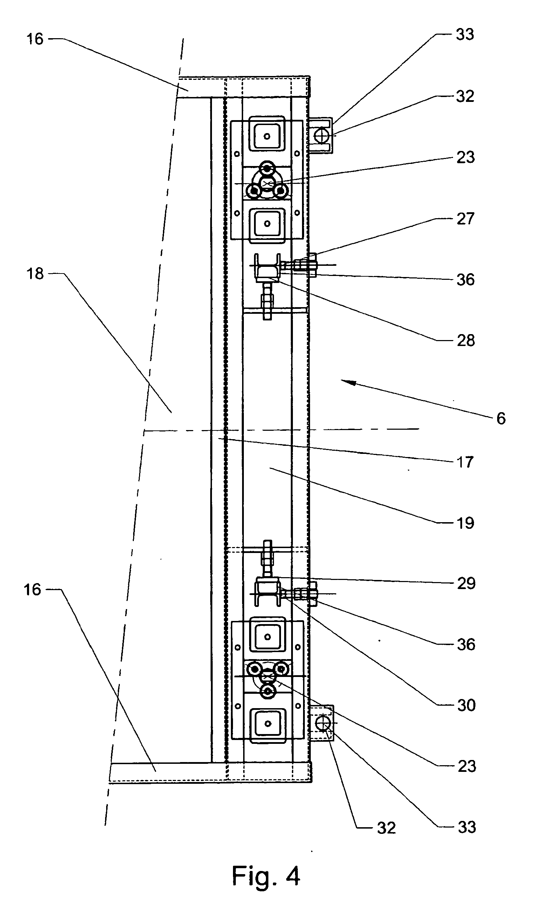

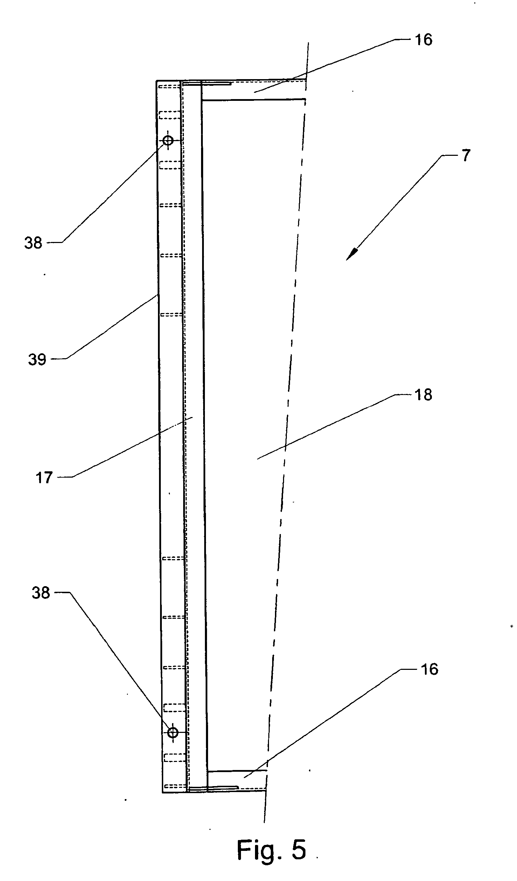

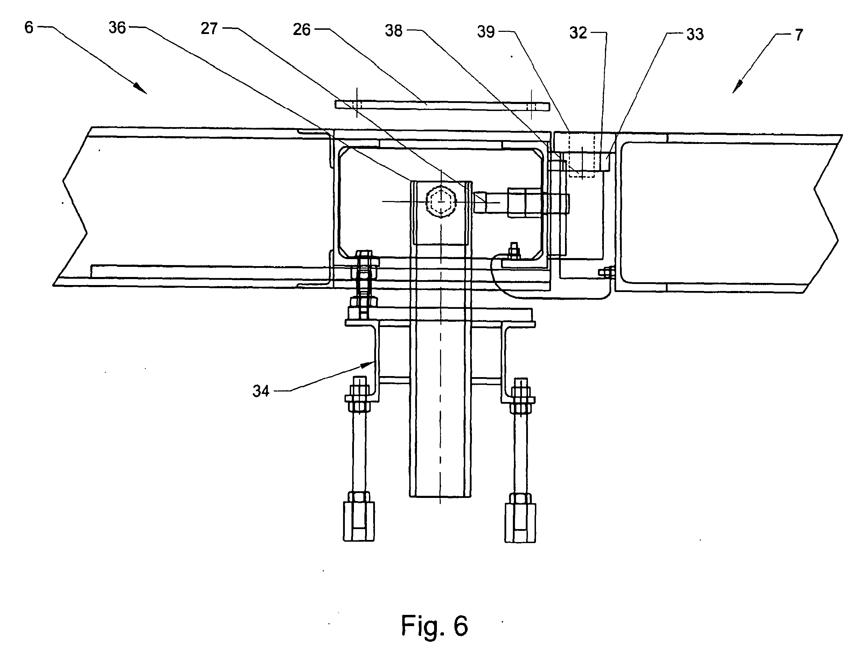

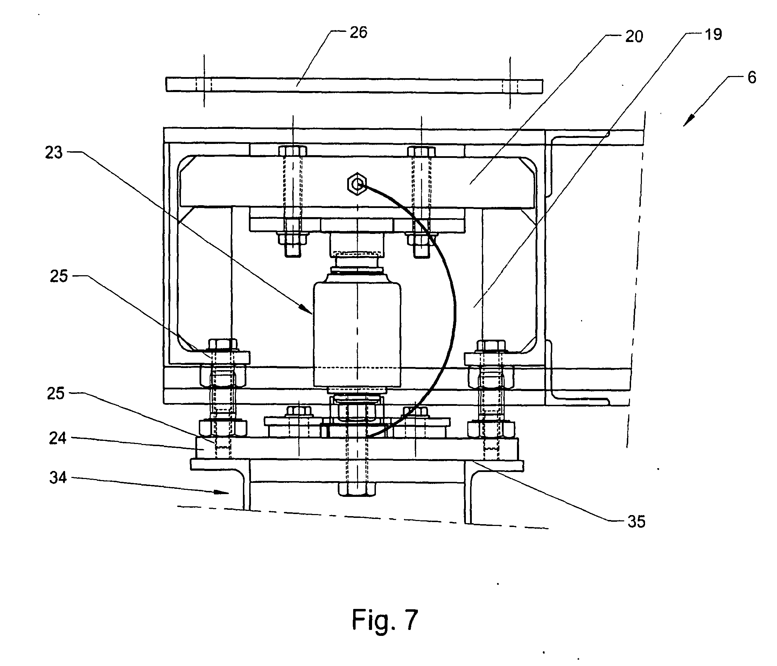

Dans le mode de réalisation représenté sur les figures 1 à 7, la fixation des modules de pesée et de liaison est réalisé par un accrochage de type tenons et mortaise.

En particulier, les moyens d'accrochages des modules de pesés sont constitués par des mortaises 32 ménagées dans un rebord 33 horizontal s'étendant à l'extérieur du bord du module. La surface de ce rebord est située en dessous de la surface du module.

L'ouvrage 2 comporte une dalle de béton dans laquelle sont scellés des dispositifs d'appui 34 comportant des surfaces d'appui 35 pour des platines 24 des capteurs de pesée 23. Ces dispositifs 34 d'appui sont du type décrit dans le document FR 2 792 407. Ils permettent de disposer de moyens d'appui de caractéristiques connues pour l'appui des platines, ce qui permet donc de réaliser le réglage et le contrôle des capteurs en usine, avant le transport des modules vers le site d'installation.

Ces dispositifs 34 comportent également des éléments profilés verticaux 36 destinées à coopérer avec les butées d'appui 27, 28, 29, 30 des modules de pesée, pour assurer les limitations du mouvement du pont par rapport à l'ouvrage dans lequel les dispositifs sont scellés.

Chaque module de liaison 7, 9, 11 comporte une portion de support présentant une surface supérieure sensiblement plane réalisée de façon similaire à celle des modules de pesée.

De plus, chaque module de liaison 7, 9, 11 comporte, sur deux bords opposés, des moyens d'accrochage 37 complémentaires des moyens d'accrochage 15 des bords d'éléments de pont actif.

En particulier, les moyens d'accrochage 37 sont constitués par des tenons 38 ménagés, de façon à être orientés vers le bas, sur un rebord 39 horizontal s'étendant à l'extérieur du bord du module. La surface supérieure de ce rebord est située dans le prolongement de la surface du module.

Les moyens d'accrochage 15 des modules de pesée et les moyens d'accrochage 37 des modules de liaisons permettent ainsi d'accrocher un module de liaison 7, 9, 11 entre deux modules de pesée 6, 8, 10, 12.

Les modules de liaison 7, 9, 11 ne possèdent ainsi aucune liaison directe au support du pont bascule, tout le poids propre du modules et des éléments reposant sur ce module étant repris par les moyens d'accrochage et les modules de pesée adjacents.

En particulier, les modules de liaison ne comportent pas de moyens de limitation du pont bascule dans son propre plan.

Ainsi, un pont-bascule 3 selon l'invention comporte au moins un module de liaison 7, 9, 11 et au moins deux modules de pesée 6, 8, 10, 12, et , de façon générale, un pont-bascule 3 selon l'invention comporte un ensemble de modules de pesée 6, 8, 10, 12 et de modules de liaison 7, 9, 11 disposés en alternance, deux modules de pesée 6, 8, 10, 12 étant disposés aux deux extrémités de l'ensemble.

Un pont-bascule selon l'invention permet donc la mise en place, sans vérification primitive à la mise en service, d'un pont bascule modulaire, dont la longueur peut être variable.

Comme il va se soi, l'invention ne se limite pas à la forme de réalisation préférentielle décrite ci-dessus, à titre d'exemples non limitatif ; elle en embrasse au contraire toutes les variantes.

## Revendications

1. Pont-bascule (3) destiné en particulier à la pesée de véhicules automobiles ou de wagons, **caractérisé en ce qu**'il comporte au moins deux modules de pesée autonomes (6, 8, 10, 12) et au moins un module de liaison (7, 9, 11),
chaque module de pesée (6, 8, 10, 12) comprenant une portion de support (13) présentant une surface supérieure sensiblement plane destinée à être positionnée de façon isostatique sur un ensemble d'au moins quatre capteurs de pesée (23), et comportant sur au moins un de ses bords des moyens d'accrochage (15),
l'au moins un module de liaison (7, 9, 11) comportant une portion de support (13) présentant une surface supérieure sensiblement plane et comportant, sur au moins deux bords opposés, des moyens d'accrochage (37) complémentaires des moyens d'accrochage (15) des bords du module de pesée (7, 9, 11), et
l'au moins un module de liaison (7, 9, 11) étant destiné à être accroché par les moyens d'accrochage (15, 37) entre deux modules de pesée (6, 8, 10, 12), sans liaison directe avec le support (2) du pont-bascule (3).

2. Pont-bascule (3) selon la revendication 1, **caractérisé en ce qu**'au moins un module de pesée (6, 8, 10, 12) comporte sur aux moins deux bords opposés des moyens d'accrochage (15).

3. Pont-bascule (3) selon l'une des revendications 1 et 2, **caractérisé en ce qu**'il comporte un ensemble de modules de pesée (6, 8, 10, 12) et de modules de liaison (7, 9, 11) disposés en alternance, et présentant deux modules de pesée (6, 8, 10, 12) aux deux extrémités.

4. Pont-bascule (3) selon l'une des revendications 1 à 3, **caractérisé en ce qu**'au moins un module de pesée (6, 8, 10, 12) comporte des moyens de limitation (27, 28, 29, 30) des mouvements du pont-bascule (3) dans son propre plan.

5. Pont-bascule (3) selon l'une des revendications 1 à 4, **caractérisé en ce qu**'au moins un module de pesée (6, 8, 10, 12) comporte des moyens (25) permettant de maintenir en position les platines d'appui des capteurs de pesée (23) lors du transport des modules.

6. Pont-bascule (3) selon l'une des revendications 1 à 5, **caractérisé en ce que** les capteurs de pesée (23) comportent des moyens de génération de signaux numériques.

7. Pont-bascule (3) selon l'une des revendications 1 à 6, **caractérisé en que** les moyens d'accrochages (15, 37) complémentaires des modules de pesée (6, 8, 10, 12) et des module de liaison (7, 9, 11) sont de type tenons et mortaises.

8. Pont-bascule (3) selon l'une des revendications 1 à 6, **caractérisé en que** les modules (6, 7, 8, 9, 10, 11, 12) sont entièrement assemblés en usine.

9. Installation de pesée comprenant un pont-bascule selon l'une des revendications 1 à 8, **caractérisée en ce qu**'elle comporte un ouvrage (2) dans lequel sont scellé des dispositifs d'appui (34) comportant des surfaces d'appui (35) pour des platines d'appui (24) des capteurs de pesée (23) des modules de pesée (6, 8, 10,12).

10. Installation de pesée selon la revendication 9, **caractérisé en ce que** les dispositifs d'appui (34) comportent des éléments (36) destinés à coopérer avec les moyens (27, 28, 29, 30) des limitations du mouvement du pont par rapport à son propre plan des modules de pesée (6, 8, 10, 12).

## Claims

1. Weighbridge (3) intended, in particular, for weighing motor vehicles or wagons, **characterised in that** it has at least two independent weighing modules (6, 8, 10, 12) and at least one connecting module (7, 9, 11),
each weighing module (6, 8, 10, 12) comprising a supporting portion (13) with a substantially plane upper surface intended to be positioned isostatically on a set of at least four weighing sensors (23), and having coupling means (15) on at least one of its edges,
the at least one connecting module (7, 9, 11) having a supporting portion (13) with a substantially plane upper surface and having, on at least two opposite edges, coupling means (37) complementary to the coupling means (15) of the edges of the weighing module (7, 9, 11), and
the at least one connecting module (7, 9, 11) being intended to be coupled by the coupling means (15, 37) between two weighing modules (6, 8, 10, 12), without direct connection to the support (2) of the weighbridge (3).

2. Weighbridge (3) according to Claim 1, **characterised in that** at least one weighing module (6, 8, 10, 12) has coupling means (15) on at least two opposite edges.

3. Weighbridge (3) according to one of Claims 1 and 2, **characterised in that** it has a set of weighing modules (6, 8, 10, 12) and connecting modules (7, 9, 11) arranged alternately, with two weighing modules (6, 8, 10, 12) at the two ends.

4. Weighbridge (3) according to one of Claims 1 to 3, **characterised in that** at least one weighing module (6, 8, 10, 12) has means for limitation (27, 28, 29, 30) of the movements of the weighbridge (3) in its own plane.

5. Weighbridge (3) according to one of Claims 1 to 4, **characterised in that** at least one weighing module (6, 8, 10, 12) has means (25) enabling the bearing plates of the weighing sensors (23) to be held in position during transportation of the modules.

6. Weighbridge (3) according to one of Claims 1 to 5, **characterised in that** the weighing sensors (23) have digital signal generating means.

7. Weighbridge (3) according to one of Claims 1 to 6, **characterised in that** the complementary coupling means (15, 37) of the weighing modules (6, 8, 10, 12) and of the connecting modules (7, 9, 11) are of the tenon and mortice type.

8. Weighbridge (3) according to one of Claims 1 to 6, **characterised in that** the modules (6, 7, 8, 9, 10, 11, 12) are completely assembled at the factory.

9. Weighing installation comprising a weighbridge according to one of Claims 1 to 8, **characterised in that** it has a structure (2) in which bearing devices (34) are sealed, having bearing surfaces (35) for bearing plates (24) of the weighing sensors (23) of the weighing modules (6, 8, 10, 12).

10. Weighing installation according to Claim 9, **characterised in that** the bearing devices (34) have elements (36) intended to cooperate with the means (27, 28, 29, 30) for the limitations of the movement of the bridge with respect to its own plane of the weighing modules (6, 8, 10, 12).

## Patentansprüche

1. Brückenwaage (3), die insbesondere für das Wiegen von Kraftfahrzeugen oder Eisenbahnwaggons bestimmt ist, **dadurch gekennzeichnet, dass** sie mindestens zwei autonome Wiegemodule (6, 8, 10, 12) und mindestens ein Verbindungsmodul (7, 9, 11) umfasst,
wobei jedes Wiegemodul (6, 8, 10, 12) einen Auflagebereich (13) hat, der eine im wesentlichen plane Fläche aufweist, die dazu bestimmt ist, in isostatischer Weise auf ein Ensemble von mindestens vier Gewichts-Sensoren (23) gesetzt zu werden, und das an mindestens einer seiner Seiten Vorrichtungen zum Einhängen (15) hat,
wobei das mindestens eine Verbindungsmodul (7, 9, 11) einen Auflagebereich (13) hat, der eine im wesentlichen plane Fläche aufweist, und das an mindestens zwei entgegengesetzten Seiten Vorrichtungen zum Einhängen (37) hat, die zu den Einhänge-Vorrichtungen (15) der Seiten des Wiegemoduls (6, 8, 10, 12) komplementär sind, und
wobei das mindestens eine Verbindungsmodul (7, 9, 11) dazu bestimmt ist, mittels der Einhänge-Vorrichtungen (15, 37) zwischen zwei Wiegemodulen (6, 8, 10, 12) eingehängt zu werden, und zwar ohne direkte Verbindung mit dem Unterbau (2) der Brückenwaage (3).

2. Brückenwaage (3) nach Anspruch 1, **dadurch gekennzeichnet, dass** mindestens ein Wiegemodul (6, 8, 10, 12) an mindestens zwei entgegengesetzten Seiten Vorrichtungen (15) zum Einhängen hat.

3. Brückenwaage (3) nach einem der Ansprüche 1 und 2, **dadurch gekennzeichnet, dass** sie ein Ensemble von Wiegemodulen (6, 8, 10, 12) und von Verbindungsmodulen (7, 9, 11) umfasst, die alternierend angeordnet sind, und dass sie zwei Wiegemodule (6, 8, 10, 12) an den beiden Enden aufweist.

4. Brückenwaage (3) nach einem der Ansprüche 1 bis 3, **dadurch gekennzeichnet, dass** mindestens ein Wiegemodul (6, 8, 10, 12) Vorrichtungen (27, 28, 29, 30) zur Begrenzung der Bewegungen der Brückenwaage (3) in ihrer eigenen Ebene hat.

5. Brückenwaage (3) nach einem der Ansprüche 1 bis 4, **dadurch gekennzeichnet, dass** mindestens ein Wiegemodul (6, 8, 10, 12) Vorrichtungen (25) umfasst, die es ermöglichen, die Auflageplatten der Gewichts-Sensoren (23) beim Transport der Module in fester Position zu halten.

6. Brückenwaage (3) nach einem der Ansprüche 1 bis 5, **dadurch gekennzeichnet, dass** die Gewichts-Sensoren (23) Vorrichtungen zum Erzeugen digitaler Signale haben.

7. Brückenwaage (3) nach einem der Ansprüche 1 bis 6, **dadurch gekennzeichnet, dass** die komplementären Vorrichtungen (15, 37) zum Einhängen der Wiegemodule (6, 8, 10, 12) und der Verbindungsmodule (7, 9, 11) vom Typ Zapfen und Zapfenloch sind.

8. Brückenwaage (3) nach einem der Ansprüche 1 bis 6, **dadurch gekennzeichnet, dass** die Module (6, 7, 8, 9, 10, 11, 12) vollständig in der Fabrik zusammengebaut werden.

9. Wiegeeinrichtung, die eine Brückenwaage nach einem der Ansprüche 1 bis 8 umfasst, **dadurch gekennzeichnet, dass** sie ein Bauwerk (2) hat, in dem Auflagevorrichtungen (34) eingelassen sind, die Auflageflächen (35) für die Auflageplatten (24) der Gewichts-Sensoren (23) der Wiegemodule (6, 8, 10, 12) haben.

10. Wiegeeinrichtung nach Anspruch 9, **dadurch gekennzeichnet, dass** die Auflagevorrichtungen (34) Elemente (36) umfassen, die dazu bestimmt sind, mit den Vorrichtungen (27, 28, 29, 30) zur Begrenzung der Bewegung der Brücke bezüglich der Ebene der Wiegemodule (6, 8, 10, 12) zusammenzuarbeiten.
